# EUROPEAN PATENT APPLICATION

(11) **EP 4 603 351 A1**
(43) Date of publication of application: **20.08.2025**
(21) Application number: 25155128.9
(22) Date of filing: 30.01.2025
(51) Int. Cl.: B60W 30/09, B60W 10/20

(54) **CONTROL DEVICE FOR VEHICLE, CONTROL METHOD FOR VEHICLE, AND COMPUTER PROGRAM**

(30) Priority: 13.02.2024 JP 2024019404
(71) Applicant: TOYOTA JIDOSHA KABUSHIKI KAISHA, Aichi-ken, 471-8571 (JP)
(72) Inventor: WADA, Mitsuo, TOYOTA-SHI, AICHI-KEN, 471-8571 (JP); SASAGAWA, Wataru, TOYOTA-SHI, AICHI-KEN, 471-8571 (JP); ABE, Kyoichi, TOYOTA-SHI, AICHI-KEN, 471-8571 (JP); SATO, Minami, TOYOTA-SHI, AICHI-KEN, 471-8571 (JP)
(74) Representative: Cabinet Beau de Loménie

(57) **Abstract**

A control device (6) configured to perform driver assist accompanied with running control of a vehicle (100) when a specific object around the vehicle (100) is present in a driver assist area set around the vehicle (100), and change at least one of an assist amount of the driver assist, an assist timing of the driver assist, and the driver assist area based on a state of recognition by a driver of the vehicle (100) of a specific object.

## Description

### FIELD

The present invention relates to a control device for a vehicle, a control method for a vehicle, and a computer program.

### BACKGROUND

Japanese Unexamined Patent Publication No. 2019-28951 discloses a conventional vehicle control device configured to detect the liability of collision with a pedestrian or two-wheeled vehicle or other moving body ahead of the host vehicle if that body is moving and to perform driver assist to avoid collision.

### SUMMARY

However, in the above-mentioned conventional vehicle control device, the assist amount and assist timing of driver assist for avoiding collision (deceleration assist, avoidance steering assist, or warning) were made the same assist amount and assist timing when the moving body ahead of the host vehicle was recognized by the driver and when it was not recognized. If the assist amount and assist timing of the driver assist end up being made the same regardless of the state of recognition by the driver of the moving body ahead of the host vehicle, depending on the driver, if recognizing the moving body ahead of the host vehicle, he is liable to feel that the assist amount of the driver assist is too large or feel that the assist timing is too early. As a result, the driver is liable to end up feeling bothered by the driver assist. On the other hand, if making the assist amount of the driver assist smaller or delaying the assist timing, if the driver does not recognize the moving body ahead of the host vehicle, collision is liable to no longer be able to be avoided.

The present invention was made focusing on such a problem point and has as its object to suitably perform driver assist in accordance with the state of recognition by the driver of an object ahead of the host vehicle.

To solve the above problem, a control device for a vehicle according to one aspect of the present invention is configured to perform driver assist accompanied with running control of a vehicle when a specific object around the vehicle is present in a driver assist area set around the vehicle, and change at least one of an assist amount of the driver assist, an assist timing of the driver assist, and the driver assist area based on a state of recognition by a driver of the vehicle of a specific object.

Further, a control method for a vehicle according to one aspect of the present invention includes performing driver assist accompanied with running control of a vehicle when a specific object around the vehicle is present in a driver assist area set around the vehicle, and changing at least one of an assist amount of the driver assist, an assist timing of the driver assist, and the driver assist area based on a state of recognition by a driver of the vehicle of the specific object.

Further, a computer program according to one aspect of the present invention makes a computer run processing for performing driver assist accompanied with running control of a vehicle when a specific object around the vehicle is present in a driver assist area set around the vehicle, and changing at least one of an assist amount of the driver assist, an assist timing of the driver assist, and the driver assist area based on a state of recognition by a driver of the vehicle of the specific object.

According to these aspects of the present invention, at least one of the assist amount of the driver assist, the assist timing of the driver assist, or the driver assist area is changed based on the state of recognition by the driver of a specific object, so it is possible to perform suitable driver assist according to the state of recognition by the driver of an object ahead of the host vehicle.

### BRIEF DESCRIPTION OF DRAWINGS

FIG. 1 is a schematic view of the configuration of a vehicle according to a first embodiment of the present invention.
FIG. 2 is a view showing one example of a driver assist area set in advance around a vehicle.
FIG. 3 is a view explaining an assist amount, assist timing, and driver assist area of driver assist in the case where the state of recognition by the driver is a first state of recognition (not yet recognized state).
FIG. 4 is a view explaining an assist amount, assist timing, and driver assist area of driver assist in the case where the state of recognition by the driver is a second state of recognition (already recognized state).
FIG. 5 is a view explaining an assist amount, assist timing, and driver assist area of driver assist in the case where the state of recognition by the driver is a third state of recognition (visually confirming state).
FIG. 6 is a flow chart for explaining the processing for setting the assist amount, assist timing, and driver assist area of driver assist according to a first embodiment of the present invention.
FIG. 7A and FIG. 7B are a view for explaining a method of setting an assist amount, assist timing, and driver assist area of driver assist according to a second embodiment of the present disclosure when the state of recognition by the driver is the first state of recognition (not yet recognized state).
FIG. 8 is a flow chart for explaining the processing for setting the assist amount, assist timing, and driver assist area of driver assist according to a second embodiment of the present invention.

### DESCRIPTION OF EMBODIMENTS

Below, referring to the drawings, embodiments of the present disclosure will be explained in detail. Note that, in the following explanation, similar components will be assigned the same reference notations.

### (First Embodiment)

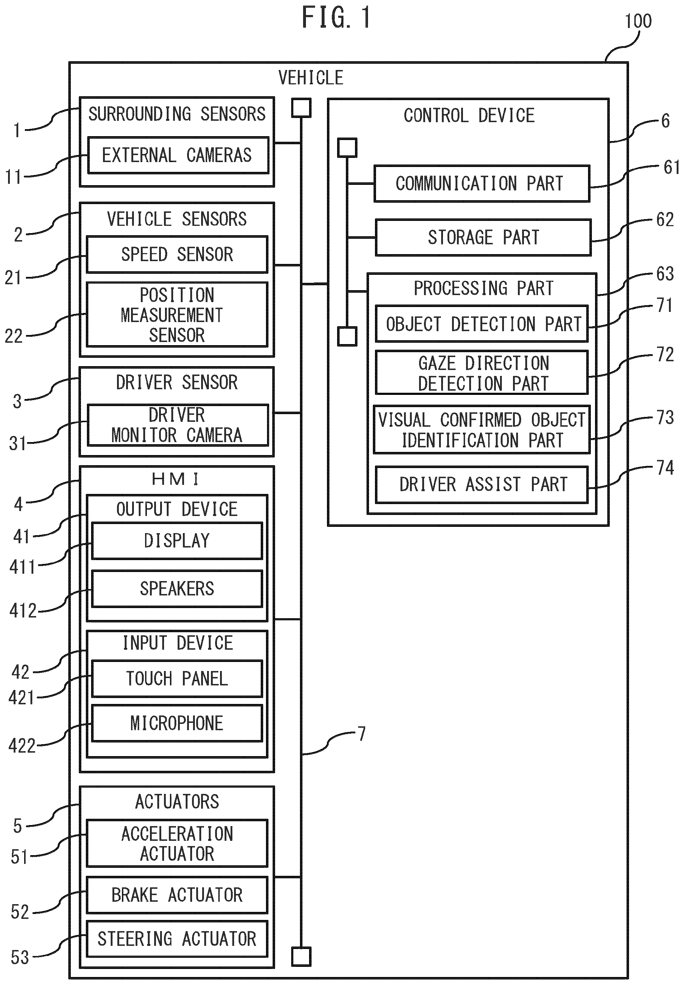

FIG. 1 is a schematic view of the configuration of a vehicle 100 according to a first embodiment of the present invention.

The vehicle 100 is provided with surrounding sensors 1, vehicle sensors 2, a driver sensor 3, an HMI (human machine interface) 4, actuators 5 and a control device 6. The surrounding sensors 1, vehicle sensors 2, driver sensor 3, HMI 4, actuators 5 and control device 6 are connected to be able to communicate through an internal vehicle network 7 based on the standard of the Control Area Network.

The surrounding sensors 1 are sensors for generating surrounding data showing the situation in the surroundings of the vehicle 100. In the present embodiment, as the surrounding sensors 1, one or more external cameras 11 for capturing the surroundings of the vehicle 100 are provided. The external cameras 11 capture the surroundings of the vehicle 100 by a predetermined frame rate (for example, 10 Hz to 40 Hz) and generate surrounding images in which the surroundings of the vehicle 100 are displayed. The external cameras 11 send the generated surrounding images as surrounding data to the control device 6 each time generating the surrounding images.

Note that instead of the external cameras 11 or in addition to the external cameras 11, it is also possible to provide as a surrounding sensor 1 a distance measuring sensor for measuring the distance to other vehicle, pedestrian, or other object present in the surroundings of the vehicle 100. As an example of a distance measuring sensor, for example, a lidar (light detection and ranging device) firing a laser and measuring distance based its reflected light, a millimeter wave radar sensor measuring distance based on the reflected wave, etc. may be mentioned.

The vehicle sensors 2 are sensors for generating various data relating to a vehicle 100. In the present embodiment, as the vehicle sensors 2, a speed sensor 21 for generating speed data showing a running speed of the vehicle 100, a position measurement sensor 22 for generating a latitude and longitude and other current position data showing the current position of the vehicle 100, etc. are provided. However, the vehicle sensors 20 are not limited to these sensors 21 to 22. The sensors 21 to 22 send the acquired data to the control device 6.

The driver sensor 3 is a sensor for generating data showing the state of the driver (below, referred to as the "driver data"). In the present embodiment, as the driver sensor 3, a driver monitor camera 31 is provided for capturing the appearance of the driver, including the face of the driver. The driver monitor camera 31 captures the appearance of the driver by a predetermined frame rate (for example, 10[Hz] to 40[Hz]) and generates an appearance image in which the appearance of the driver is shown. The driver monitor camera 31 sends the generated appearance image as driver data to the control device 6 each time generating an appearance image of the driver.

The HMI 4 is a user interface for transfer of information between the vehicle 100 and its occupants. The HMI 4 is provided with output devices 41 for providing notifications to the vehicle occupants through the physical senses (for example, sight, hearing, touch, etc.) of the vehicle occupants and input devices 42 for the vehicle occupants to perform input operations and response operations. In the present embodiment, as output devices 41, a display (for example, meter display, center display, heads-up display, etc.) and speakers are provided. As the input devices 42, a touch panel and microphone are provided.

The HMI 4 displays information (for example, text information or graphic information) corresponding to a display signal received from the control device 6 on the display and outputs audio corresponding to an audio signal from the speakers. Further, the HMI 4 sends data input by the touch panel or input by voice by the vehicle occupant through the input devices 42 to the control device 6.

The HMI 4 may be mounted in the vehicle 100 in advance or may be a smartphone or other terminal held by a vehicle occupant. In the latter case, for example, information may be transferred by short distance wireless between the vehicle 100 and terminal of the vehicle occupant, the terminal of the vehicle occupant and an outside server (not shown) may communicate with each other, and information may be transferred indirectly through the server.

The actuators 5 are devices used for controlling operations of the vehicle 100. In the present embodiment, as the actuators 5, acceleration actuators 51 for controlling acceleration of the vehicle 100 (for example, at least one of the engine and motor), brake actuators 52 for controlling braking of the vehicle 100 (for example, a hydraulic actuator), and steering actuators 53 for controlling steering of the vehicle 100 (for example, a steering motor) are provided.

The control device 6 is an ECU (electronic control unit) provided with a communication part 61, storage part 62, and processing part 63.

The communication part 61 has a communicate interface circuit for connecting the control device 6 to the internal vehicle network 7. The communication part 61 supplies the various data received from the sensors 1to 3 and the HMI 4, etc. to the processing part 63. Further, the communication part 61 outputs the various signals output from the processing part 63 to the HMI 4 and the actuators 5, etc.

The storage part 62 has an HDD (hard disk drive), SSD (solid state drive), semiconductor memory, or other storage medium and stores various computer programs and data etc. used for processing at the processing part 63.

The processing part 63 has one or more CPUs (central processing units) and their peripheral circuits and runs various computer programs stored in the storage part 62. The processing part 63 is for examples a processor. The processor may further have other processing circuits such as a logical operation unit, numerical operation unit, or graphic processing unit. The processing part 63 performs processing in accordance with a computer program so as to function as an object detection part 71, a gaze direction detection part 72, a visually confirmed object identification part 73 and a driver assist part 74 and operate as a function part (module) realizing a predetermined function. In the following explanation, if explaining the processing using the function parts 71-74 as subjects, the processing part 63 runs programs for realizing the function parts 71-74.

Below, the content of the specific processing performed at the control device 6 will be explained. That is, the content of the function parts 71-74 realized by the processing part 63 performing processing in accordance with the programs will be explained.

The object detection part 71 detects an object present around the vehicle 100 based on the surrounding data. The object detection part 71, for example, successively inputs surrounding images received from the external cameras 11 to a classifier to detect a region in the surrounding images in which vehicles, two-wheeled vehicles, pedestrians, buildings, and other objects are shown and the types of objects shown in the region. The classifier, for example, can be made a convolutional neural network (CNN) having a plurality of convolutional layers connected in series from the input side to the output side. The object detection part 71 uses the standard sizes of objects stored in the storage part 62 for each type of object and the size of an object detected in the surrounding images to estimate a distance from the external cameras 11 to the object and tracks the object detected in the surrounding images along a time series to thereby a calculate a position and speed of the object. Note that, the method of detection of an object is not limited to such a method. Various known techniques can be used for detection.

The gaze direction detection part 72 successively processes the appearance images (facial images) of the driver received from the driver monitor camera 31 to thereby detect the position of the center of a pupil forming a moving point (that is, the gaze origin of the driver) and the Purkinje image (cornea reflected image) forming a reference point and detect the gaze direction of the driver based on the positional relationship of the Purkinje image and center of the pupil (position of moving point with respect to reference point). Note that, the method of detection of the gaze direction of the driver is not limited to such a method. Various known techniques can be used for detection. For example, the facial orientation direction of the driver may be deemed the gaze direction of the driver.

The visually confirmed object identification part 73 identifies an object ahead in the gaze direction of the driver, that is, an object which the driver visually confirms (below, referred to as a "visually confirmed object") based on the position of the object around the vehicle 100 and the gaze direction of the driver. Further, the visually confirmed object identification part 73 tags an object that has been identified as a visually confirmed object even once as an already recognized object which has been recognized by the driver. In this way, a visually confirmed object is an object which a driver is currently visually confirming. On the other hand, an already recognized object will sometimes be a visually confirmed object and will sometimes not be a visually confirmed object. That is, an already recognized object will sometimes be an object which a driver is currently visually confirming and will sometimes be an object which a driver had visually confirmed and recognized in the past, but is currently not being visually confirmed.

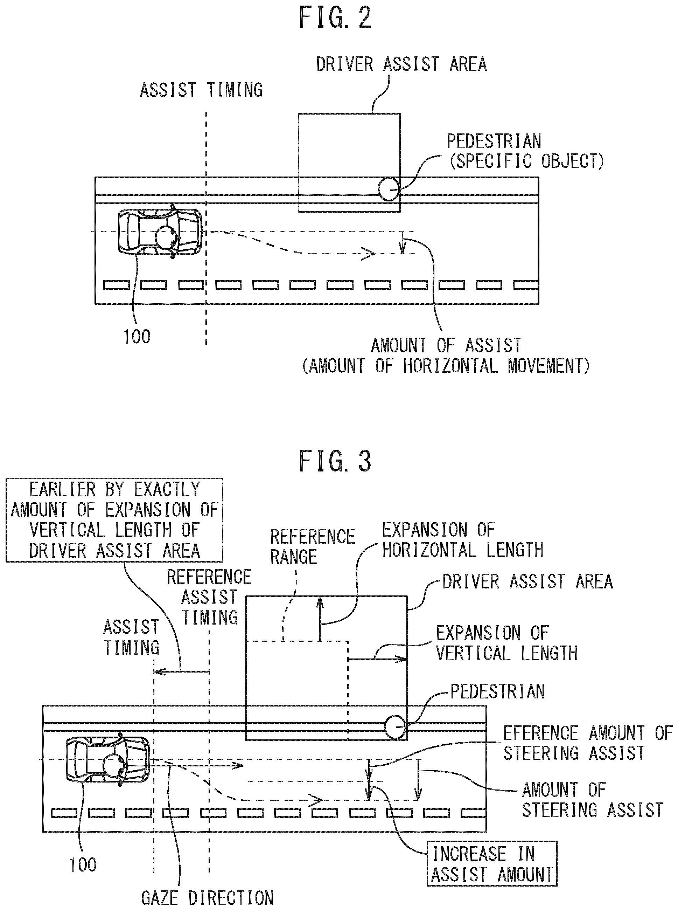

If there is a pedestrian, two-wheeled vehicle, parked vehicle, or other specific object detected by the object detection part 71 in the driver assist area (see FIG. 2) set in advance around the vehicle 100, the driver assist part 74 performs driver assist so as to avoid a collision with that specific object or a moving body which may be present in a blind spot of a parked vehicle (for example, a pedestrian), a person who is liable to get out from a parked vehicle, etc., that is, a collision due to a specific object present in the driver assist area. In the present embodiment, the driver assist part 74 performs driver assist accompanied with steering control (below, referred to as "steering assist") as driver assist for avoiding a collision due to a specific object present in the driver assist area. The steering assist is driver assist controlling the steering actuator 53 to automatically perform a steering operation of the vehicle 100.

Below, referring to FIG. 2 to FIG. 5, driver assist by the driver assist part 74 will be explained in further detail.

FIG. 2 is a view showing one example of a driver assist area set in advance around the vehicle 100. Note that, in FIG. 2, the driver assist area is shown at only the left side of the vehicle 100 for preventing complication of the drawing, but the driver assist area is similarly formed at the right side of the vehicle 100 as well.

In the present embodiment, the driver assist area is made the region at the front and sides of the vehicle 100, that is, the region where there is a possibility of the presence of some sort of moving body suddenly appearing ahead of vehicle 100. Further, as explained above, in the present embodiment, if there is a pedestrian, two-wheeled vehicle, parked vehicle, or other specific object present in the driver assist area, steering assist is performed as driver assist for avoiding accidents due to that specific object.

For example, in the example shown in FIG. 2, there is a pedestrian present in the driver assist area, so to avoid a collision due to that pedestrian unexpectedly suddenly stepping out into the road, a steering operation is performed so that the distance between the vehicle 100 and pedestrian in the horizontal direction (vehicle width direction) is enlarged and the vehicle 100 is made to move in the horizontal direction to an extent not sticking out from the lane.

In performing such driver assist, a specific object ahead of the vehicle 100 will sometimes be recognized by the driver and will sometimes not be recognized. If ending up making the assist amount and assist timing of the driver assist the same regardless of the state of recognition by the driver of a specific object ahead of the vehicle 100, depending on the driver, if recognizing the specific object ahead of the vehicle 100, he is liable to feel the assist amount of the driver assist is too great or to feel that the assist timing is too early. As a result, the driver is liable to end up feeling the driver assist is bothersome. On the other hand, if making the assist amount of the driver assist smaller or delaying the assist timing, if the specific object ahead of the vehicle 100 is not recognized by the driver, it is liable to become no longer possible to avoid collisions due to that specific object.

Therefore, in the present embodiment, it was decided to change the assist amount, assist timing, and driver assist area at the driver assist based on the state of recognition by the driver of a specific object ahead of the vehicle 100. Specifically, the states of recognition by the driver are classified into the three states of recognition of a first state of recognition where the driver has not recognized a specific object ahead of the vehicle 100 even once (not yet recognized state), a second state of recognition where the driver has recognized a specific object once, but is not currently visually confirming it (already recognized state), and a third state of recognition where the driver is currently visually confirming that object (visually confirming state) and changes the assist amount, assist timing, and driver assist area at the driver assist in accordance with the different states of recognition.

Below, referring to FIG. 3 to FIG. 5, the assist amount, assist timing, and driver assist area at the driver assist at the different states of recognition will be explained.

FIG. 3 is a view for explaining an assist amount, assist timing, and driver assist area of driver assist in the case where the state of recognition by the driver is the first state of recognition (not yet recognized state).

If there is a pedestrian etc. present at the front and side of the vehicle 100, to avoid a collision due to the pedestrian etc. unexpectedly stepping out into the road, the driver usually makes the host vehicle move in the horizontal direction to make it pass the side of the pedestrian etc. so that the vehicle 100 moves away from the pedestrian etc.

Therefore, in the present embodiment, as shown in FIG. 3, if making the average value of the amount of movement in the horizontal direction at this time the reference amount of steering assist, if the state of recognition by the driver is the first state of recognition (not yet recognized state), it is assumed that the attention with respect to the side of the vehicle 100 will become laxer, so the amount of steering assist at the time of driver assist is made greater than the predetermined reference amount of steering assist. The reference amount of steering assist can, for example, be set based on statistical data of running tests by several drivers etc.

Further, in the present embodiment, if the state of recognition by the driver is the first state of recognition (not yet recognized state), in the same way as the assist amount, it is assumed that the attention with respect to the sides of the host vehicle will become laxer, so the assist timing of driver assist is made earlier than the predetermined reference assist timing. The reference assist timing can, for example, be set to the timing whereby the time to collision (TTC) between the host vehicle and the pedestrian etc. covered by the driver assist becomes less than or equal to a predetermined reference time period. The reference time period is a time period which can be suitably set and for example is made a time period of several seconds to tens of seconds or so.

In the present embodiment, driver assist is started when a specific object enters the driver assist area, so the position of the end part of the driver assist area at the front side in the vehicle advancing direction (below, referred to as the "front end part") changes depending on the assist timing of the driver assist. Therefore, in the present embodiment, as shown in FIG. 3, if the state of recognition by the driver is the first state of recognition (not yet recognized state), the vertical length of the driver assist area (length to vehicle advancing direction side) is expanded to the front side from the reference vertical length so that the assist timing of the driver assist becomes earlier than the reference assist timing by exactly a predetermined time period. That is, if the state of recognition by the driver is the first state of recognition (not yet recognized state), the position of the front end part of the driver assist area becomes set at a position whereby the assist timing of the driver assist becomes earlier than the time of the reference assist timing by exactly a predetermined time period. The reference vertical length is the length of the driver assist area to the vehicle advancing direction side set when the assist timing of the driver assist is the reference assist timing and is also the length of the driver assist area to the vehicle advancing direction side set when the state of recognition by the driver is the later explained second state of recognition (already recognized state).

Further, in the present embodiment, as shown in FIG. 3, if the state of recognition by the driver is the first state of recognition (not yet recognized state), it is assumed that the attention with respect to the sides of the vehicle 100 will become laxer, so to reinforce the alertness with respect to the sides of the host vehicle, the horizontal length of the driver assist area (length to vehicle width sides) is expanded toward a direction away from the host vehicle from a predetermined reference horizontal length. The reference horizontal length is the length to the vehicle width direction sides of the driver assist area set when the state of recognition by the driver is the later explained second state of recognition (already recognized state).

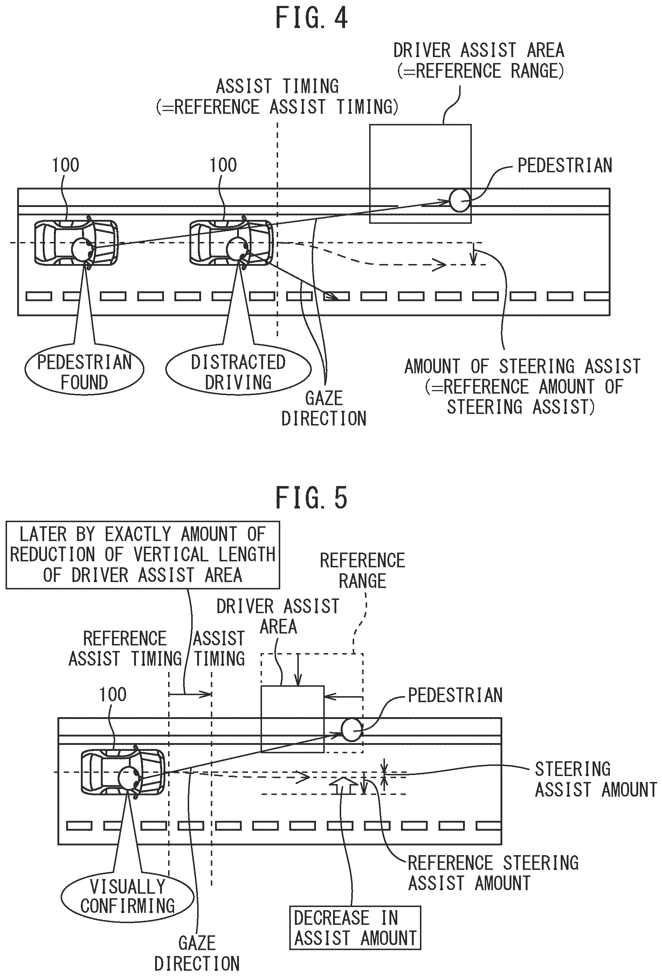

FIG. 4 is a view explaining the assist amount, assist timing, and driver assist area at the driver assist in the case where the state of recognition by the driver is the second state of recognition (already recognized state).

The second state of recognition, as explained above, is the state where the driver has recognized a specific object ahead of the host vehicle once, but is not currently visually confirming it, for example, as shown in FIG. 4, is the state where the driver visually confirmed a pedestrian etc. present at the front and side of the host vehicle, then became distracted and faced another direction.

In this way, the second state of recognition, unlike the first state of recognition (not yet recognized state), is a state where currently a specific object is not being visually confirmed, but that specific object was recognized. Therefore, in the present embodiment, if the state of recognition by the driver is the second state of recognition (already recognized state), the assist amount, assist timing, and driver assist area at the driver assist are respectively made the reference assist amount, the reference timing, and the reference range. That is, the amount of steering assist at driver assist is set to the reference amount of steering assist. Further, the vertical length of the driver assist area is set to the reference vertical length so that the assist timing of the driver assist becomes the reference assist timing. The horizontal length of the driver assist area is set to the reference horizontal length. That is, the vertical length and the horizontal length of the driver assist area are respectively set to the reference range set to the reference lengths.

FIG. 5 is a view explaining the assist amount, assist timing, and driver assist area at the driver assist in the case where the state of recognition by the driver is the third state of recognition (visually confirming state).

The third state of recognition, as explained before, is the state where the driver is visually confirming a specific object ahead of the host vehicle and can be said to be a state where he is forewarned of various dangers due to that specific object. Therefore, in the present embodiment, if the state of recognition by the driver is the third state of recognition (visually confirming state), the amount of steering assist at the driver assist is made smaller than the reference amount of steering assist.

Further, in the present embodiment, if the state of recognition by the driver is the third state of recognition (visually confirming state), the assist timing of the driver assist is made later than the reference assist timing. That is, the position of the front end part of the driver assist area is set to a position so that the assist timing of the driver assist becomes later than the reference assist timing by exactly a predetermined time period. Therefore, when the state of recognition by the driver is the third state of recognition, the position of the front end part of the driver assist area becomes a position closer to the host vehicle compared with the first state of recognition and second state of recognition.

Further, in the present embodiment, the horizontal length of the driver assist area is set to a length shorter than the reference horizontal length.

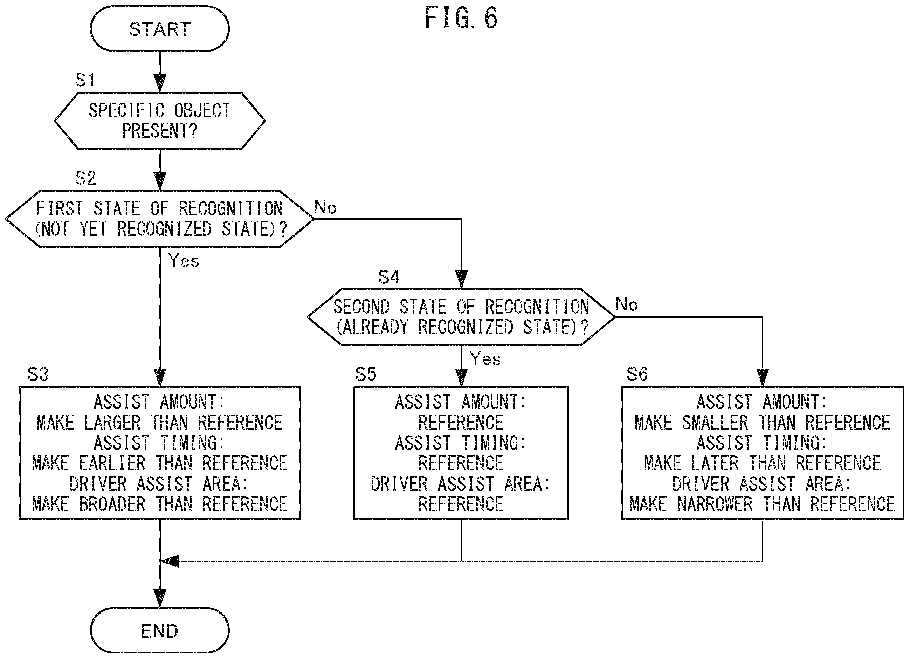

FIG. 6 is a flow chart for explaining the processing for setting the assist amount, assist timing, and driver assist area of the driver assist which the driver assist part 74 and in turn the control device 6 perform. The control device 6 repeatedly performs the present routine by a predetermined processing period ΔT.

At step S1, the control device 6 judges whether there is a specific object at the front and side of the vehicle 100. In the present embodiment, the specific object is mentioned as a pedestrian, two-wheeled vehicle, or parked vehicle, but the specific object is not limited to these objects. One or more of these objects may be made the specific object. If there is a specific object at the front and side of the vehicle 100, the control device 6 proceeds to the processing of step S2. On the other hand, if there is no specific object ahead of the vehicle 100,, the control device 6 ends the current processing.

At step S2, the control device 6 judges if the state of recognition by the driver of the specific object present at the front and side of the vehicle 100 is the first state of recognition (not yet recognized state). If the specific object present ahead of the vehicle 100 is not a visually confirmed object nor an already recognized object, the control device 6 judges that the state of recognition by the driver is the first state of recognition and proceeds to the processing of step S3. On the other hand, if the specific object present ahead of the vehicle 100 is a visually confirmed object or an already recognized object, the control device 6 proceeds to the processing of step S4.

At step S3, the control device 6 makes the assist amount of driver assist greater than the reference assist amount. Further, the control device 6 expands the vertical length (length in vehicle advancing direction) of the driver assist area so that the assist timing becomes earlier than the reference assist timing. It is assumed that attention with respect to the side will become laxer, therefore the horizontal length of the driver assist area (length in vehicle width direction) also is expanded accordingly.

At step S4, the control device 6 judges if the state of recognition by the driver of a specific object present at the front and side of the vehicle 100 is the second state of recognition (already recognized state). If the specific object present at the front and side of the vehicle 100 is not a visually confirmed object, but is an already recognized object, the control device 6 judges that the state of recognition by the driver is the second state of recognition and proceeds to the processing of step S5. On the other hand, if the specific object present at the front and side of the vehicle 100 is a visually confirmed object, the control device 6 judges that the state of recognition by the driver is the third state of recognition (visually confirming state) and proceeds to the processing of step S6.

At step S5, the control device 6 makes the assist amount of the driver assist the reference assist amount. Further, the control device sets the vertical length of the driver assist area (length in vehicle advancing direction) so that the assist timing becomes the reference assist timing. The horizontal length (length in vehicle width direction) is set to the reference.

At step S6, the control device 6 makes the assist amount of the driver assist smaller than the reference assist amount. Further, the control device 6 makes the vertical length of the driver assist area (length in vehicle advancing direction) shorter so that the assist timing becomes later than the reference assist timing. The horizontal length of the driver assist area (length in vehicle width direction) is also made shorter.

The control device 6 of the vehicle 100 according to the present embodiment explained above is configured so that when a specific object around the vehicle 100 is present in the driver assist area set around the vehicle 100, it performs driver assist accompanied with running control of the vehicle 100 and changes at least one of the assist amount of the driver assist, the assist timing of the driver assist, and the driver assist area based on the state of recognition by the driver of the vehicle 100 of the specific object.

Due to this, it is possible to suitably perform driver assist accompanied with running control of the vehicle according to the state of recognition by the driver of a specific object around the vehicle 100.

In the present embodiment, the control device 6 is configured so as to make the assist amount of the driver assist smaller than a predetermined reference amount, make the assist timing of the driver assist later than a predetermined reference timing, or make the driver assist area narrower than a predetermined reference range when the state of recognition by the driver of a specific object is the third state of recognition where he is visually confirming the specific object (visually confirming state).

Further, the control device 6 is configured so as to make the assist amount of the driver assist greater than the predetermined reference amount, make the assist timing of the driver assist earlier than the predetermined reference timing, or make the driver assist area broader than the predetermined reference range when the state of recognition by the driver of a specific object is the first state of recognition where he has not visually confirmed the specific object even once and has not recognized the specific object (not yet recognized state).

Further, the control device 6 is configured so as to set the assist amount of the driver assist at the predetermined reference amount, set the assist timing of the driver assist at the predetermined reference timing, and set the driver assist area at the predetermined reference range when the state of recognition by the driver of a specific object is the second state of recognition where he had recognized the specific object, had taken his gaze off from the specific object, and now is not visually confirming the specific object (already recognized state).

That is, in the present embodiment, the control device 6 is configured to make the assist amount of the driver assist smaller, make the assist timing of the driver assist later, or make the driver assist area narrower compared with the second state of recognition (already recognized state) when the state of recognition by the driver of a specific object is the third state of recognition (visually confirming state) and is configured to make the assist amount of the driver assist larger, make the assist timing of the driver assist earlier, or make the driver assist area broader compared with the second state of recognition (already recognized state) when the state of recognition by the driver of a specific object is the first state of recognition (not yet recognized state).

Note that, the control device 6 is configured so as to judge that the state of recognition is the third state of recognition (visually confirming state) and tag the specific object as an object already recognized by the driver when there is a specific object in the gaze direction of the driver. Further, it is configured so that if there is a specific object present around the vehicle 100, when the specific object is not present in the gaze direction of the driver, it judges that the state of recognition is the second state of recognition (already recognized state) if the specific object is tagged to be an already recognized object and judge that the state of recognition is the first state of recognition (not yet recognized state) if the specific object is not tagged to be an already recognized object.

In this way, according to the present embodiment, if the driver is visually confirming a specific object, the assist amount of the driver assist, the assist timing of the driver assist, or the driver assist area is set so driver assist is kept from being performed. For this reason, it is possible to keep unnecessary driver assist from being performed regarding of the specific object being visually confirmed. As a result, it is possible to keep the driver from ending up feeling bothered by driver assist.

Further, the assist amount of the driver assist, the assist timing of the driver assist, or the driver assist area is set so that driver assist is proactively performed if the driver has not recognized a specific object. For this reason, it is possible to keep collision from occurring due to a specific object which the driver has not recognized.

### (Second Embodiment)

Next, a second embodiment of the present invention will be explained. The present embodiment differs from the first embodiment on the point of further changing the assist amount, assist timing, and driver assist area at the driver assist in accordance with an angle Θ formed by a direction of a specific object and a gaze direction of the driver if the state of recognition by the driver of a specific object present at the front and side of the vehicle 100 is the first state of recognition (not yet recognized state). Below, this point of difference will be focused on in the explanation.

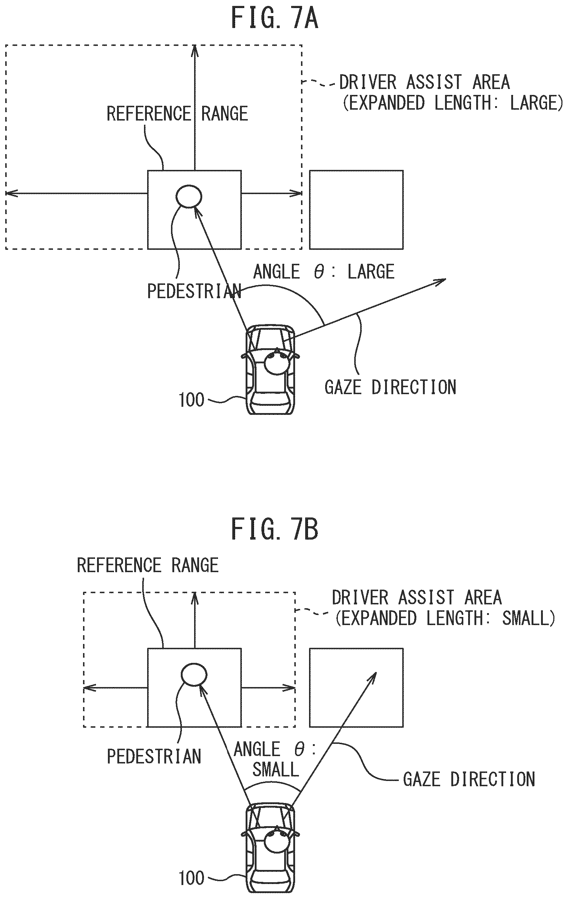

FIG. 7A and FIG. 7B are a view explaining the method of setting the assist amount, assist timing, and driver assist area of driver assist according to the present embodiment when the state of recognition by the driver is the first state of recognition (not yet recognized state).

As shown in FIG. 7A and FIG. 7B, compared to when the angle Θ formed by the direction of a specific object and a gaze direction of the driver is small (FIG. 7B), when the angle Θ is large (FIG. 7A), it is assumed the attention of the driver with regard to the side of the vehicle 100 (in example of FIG. 7A and FIG. 7B, the left side) will become laxer. That is, the further the gaze of the driver from a specific object, the more it is assumed that attention of the driver with respect to the sides of the vehicle 100 will become laxer.

Therefore, in the present embodiment, it was decided to change the assist amount, assist timing, and driver assist area at the driver assist in accordance with the angle Θ if the state of recognition by the driver is the first state of recognition (not yet recognized state). Specifically, it was decided to make the assist amount of the driver assist larger than the reference assist amount the larger the angle Θ. Further, it was decided to make assist timing earlier than the reference assist timing the larger the angle Θ by expanding the vertical length of the driver assist area (length in vehicle advancing direction) to the front side from the reference vertical length. Further, it was decided to expand the horizontal length of the driver assist area (length in vehicle width direction) to the left-right directions from the reference horizontal length the larger the angle O. Due to this, if the state of recognition by the driver is the first state of recognition (not yet recognized state), it is possible to perform suitable driver assist in accordance with the degree of distracted driving of the driver. Note that, as shown in FIG. 7A and FIG. 7B, the driver assist area is expanded only at the side where there is a not yet recognized specific object present (in example of FIG. 7A and FIG. 7B, the left side).

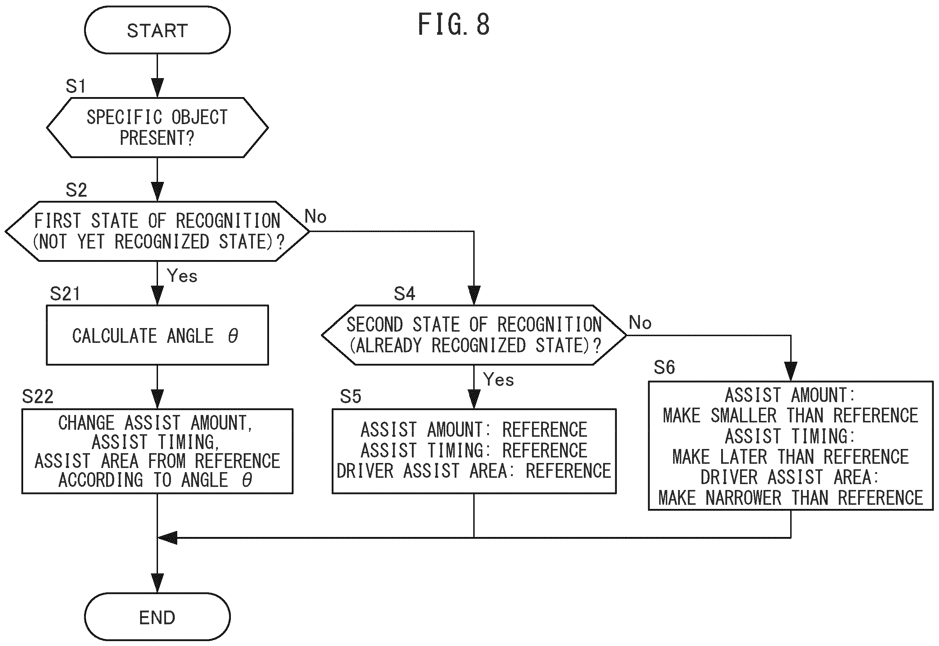

FIG. 8 is a flow chart for explaining the processing for setting the assist amount, assist timing, and assist area of driver assist according to the present embodiment performed by the driver assist part 74 and in turn the control device 6. Note that, in FIG. 8, the processings of steps S1, S2, and S4 to S6 are similar to the first embodiment, so explanations will be omitted here.

At step S21, the control device 6 calculates the angle Θ formed by the direction of a specific object at the front and side of the vehicle 100 and the gaze direction of the driver.

At step S22, the control device 6 changes the assist amount, assist timing, and assist area of driver assist based on the angle O. In the present embodiment, the control device makes the assist amount of the driver assist larger than the reference assist amount the larger the angle Θ becomes. Further, the control device expands the vertical length of the driver assist area (length in vehicle advancing direction) to the front side compared with the reference vertical length the larger the angle Θ becomes. Further, the control device expands the horizontal length of the driver assist area (length in vehicle width direction) to the left-right directions compared with the reference horizontal length the larger the angle Θ becomes.

The control device 6 of the vehicle 100 according to the present embodiment explained above is configured to enlarge the assist amount of the driver assist, make the assist timing of the driver assist earlier than the reference timing, or broaden the driver assist area from the reference range the greater the angle Θ formed by the direction of a specific object and the gaze direction or facial orientation direction of the driver when the state of recognition by the driver of the specific object is the first state of recognition (not yet recognized state).

Due to this, it is possible to provide suitable driver assist in accordance with the degree of distracted driving of the driver. For this reason, it is possible to suppress the occurrence of collision due to a specific object which the driver does not recognize.

Above, embodiments of the present disclosure were explained, but the embodiments only show some of the applications of the present disclosure and are not meant to limit the technical scope of the present disclosure to the specific configurations of the embodiments.

For example, in the above embodiments, as driver assist for avoiding a collision due to a specific object, steering assist was performed, but deceleration assist may also be provided along with steering assist. Deceleration assist is driver assist controlling the brake actuator 52 to automatically perform a brake operation of the vehicle 100. If providing deceleration assist in the case where the state of recognition by the driver is the first state of recognition (not yet recognized state), the deceleration assist amount, that is, the degree of deceleration at the time of a brake operation, may be made greater than the predetermined reference deceleration assist amount. Further, if providing deceleration assist in the case where the state of recognition by the driver is the third state of recognition (visually confirming state), the deceleration assist amount may be made smaller than the predetermined reference deceleration assist amount or may be left as the reference deceleration assist amount.

Further, in the above embodiments, the assist amount of the driver assist, assist timing of the driver assist, and the driver assist area were changed based on the state of recognition by the driver of a specific object, but naturally it is also possible to change just one or two among them.

Further, in the above embodiments, the computer programs run at the control device 6 may be provided in a form recorded at a computer readable portable recording medium such as a semiconductor memory, magnetic recording medium, or optical recording medium.

Further, the above embodiments may be suitably combined.

## Claims

1. A control device (6) for a vehicle (100),
the control device (6) configured to:
perform driver assist accompanied with running control of the vehicle (100) when a specific object around the vehicle (100) is present in a driver assist area set around the vehicle (100); and
change at least one of an assist amount of the driver assist, an assist timing of the driver assist, and the driver assist area based on a state of recognition by a driver of the vehicle (100) of a specific object.

2. The control device (6) for a vehicle (100) according to claim 1, wherein
the control device (6) is configured to perform at least one of the following when the state of recognition is a visually confirming state where the specific object is visually confirmed: making the assist amount of driver assist smaller than a predetermined reference amount, making the assist timing of the driver assist later than a predetermined reference timing, and making the driver assist area narrower than a predetermined reference range.

3. The control device (6) for a vehicle (100) according to claim 1 or claim 2, wherein
the control device (6) is configured to perform at least one of the following when the state of recognition is a not yet recognized state where the specific object has not been visually confirmed even one time and the specific object has not been recognized: making the assist amount of driver assist larger than a predetermined reference amount, making the assist timing of the driver assist earlier than a predetermined reference timing, and making the driver assist area broader than a predetermined reference range.

4. The control device (6) for a vehicle (100) according to claim 3, wherein
the control device (6) is configured to perform at least one of the following when the state of recognition is a not yet visually recognized state: making the assist amount of driver assist larger than the reference amount, making the assist timing of the driver assist earlier than the reference timing, and making the driver assist area broader than the reference range the larger the angle formed by the direction of the specific object and the gaze direction or facial orientation direction of the driver.

5. The control device (6) for a vehicle (100) according to any one of claim 2 to claim 4, wherein
the control device (6) is configured to set the assist amount of driver assist at the reference amount, set the assist timing of the driver assist to the reference amount, and set the driver assist area to the reference range, when the state of recognition is an already recognized state where the driver had recognized the specific object, had taken his gaze off from the specific object, and now is not visually confirming the specific object (already recognized state).

6. The control device (6) for a vehicle (100) according to claim 1, wherein
the control device (6) is configured to perform at least one of the following when the state of recognition is a visually confirming state where the specific object is visually confirmed compared with an already recognized state where the driver had recognized the specific object, had taken his gaze off from the specific object, and now is not visually confirming the specific object (already recognized state): making the assist amount of driver assist smaller, making the assist timing of the driver assist later, and making the driver assist area narrower.

7. The control device (6) for a vehicle (100) according to claim 6, wherein
the control device (6) is configured to perform at least one of the following when the state of recognition is a not yet recognized state where the specific object is not recognized with the specific object not visually confirmed even once compared with the already recognized state: making the assist amount of driver assist larger, making the assist timing of the driver assist earlier, and making the driver assist area broader.

8. The control device (6) for a vehicle (100) according to claim 7, wherein
the control device (6) is configured to:
judge that the state of recognition is the visually confirming state and tag the specific object as an object recognized by the driver when the specific object is present in a gaze direction of the driver; and,
if the specific object is present around the vehicle, when the specific object is not present in the gaze direction of the driver, judge that the state of state of recognition is the already recognized state if the specific object is tagged as an already recognized object and judge that the state of recognition is the not yet recognized state if the specific object is not tagged as the already recognized object.

9. The control device (6) for a vehicle (100) according to any of claim 1 to claim 8, wherein
the running control is steering control performing a steering operation of the vehicle (100) automatically.

10. A control method for a vehicle (100),
the control method comprising:
performing driver assist accompanied with running control of the vehicle (100) when a specific object around the vehicle (100) is present in a driver assist area set around the vehicle (100); and
changing at least one of an assist amount of the driver assist, an assist timing of the driver assist, and the driver assist area based on a state of recognition by a driver of the vehicle (100) of the specific object.

11. A computer program for making a computer run processing for:
performing driver assist accompanied with running control of a vehicle (100) when a specific object around the vehicle (100) is present in a driver assist area set around the vehicle (100); and
changing at least one of an assist amount of the driver assist, an assist timing of the driver assist, and the driver assist area based on a state of recognition by a driver of the vehicle (100) of the specific object.
